# EUROPEAN PATENT APPLICATION

(11) **EP 3 069 854 A1**
(43) Date of publication of application: **21.09.2016**
(21) Application number: 15159240.9
(22) Date of filing: 16.03.2015
(51) Int. Cl.: B29C 67/00, B22F 3/105

(54) **ADDITIVE MANUFACTURING PROCESS WITH DIFFERENT THICKNESSES OF LAYERS TO BE DENSIFIED**

(71) Applicant: Siemens Aktiengesellschaft, 80333 München (DE)
(72) Inventor: Simmons, Ulf, SE60370 Norrkoping (SE)

(57) **Abstract**

A method for Additive Manufacturing is proposed, wherein certain areas of a component to be built up remains undensified during applying a densifying at least two powder layers, but wherein they are densified together in a mediate or last step.

## Description

The invention relates to an additive manufacturing process (AM), wherein layers of powder are applied on a substrate which will layer-wise build up and wherein the to be densified powder layers are selectively densified.

Selective laser melting (SLM) as a part of AM is a well known and a modern method of creating components from powder material. The machine used together with this method comprises a table or substrate on which the part is built layer by layer after the feeding of a layer of powder which is molten by a laser beam. The layer thickness is created by a scraper that moves over the powder bed and removes all excess powder. The layer thickness is typically 20µm or 40µm. The laser beam then scans over the surface and melts the powder on selective areas where one wants to build the part. The process is slow compared to other conventional manufacturing methods. The building speed is a combination of power applied and the thickness of each layer. The thickness of each layer is what usually controls the surface smoothness and the amount of detail that can be obtained on the item produced. The power and the scanning speed applied is dependent on how much energy is required to actually melt the particles. Clearly a conflict is here, both fine structures and smoothness can be obtained with long processing time or coarse structures with few details can be obtained by shorter processing time.

In all applications of AM parts are always manufactured with total exposure of each layer at each pass.

It is therefore the aim of the invention to overcome the above mentioned problem and to speed up build-time.

The task is solved by a method according to claim 1.

In the subclaims further advantages are listed which can be arbitrarily combined with each other to yield further advantages.

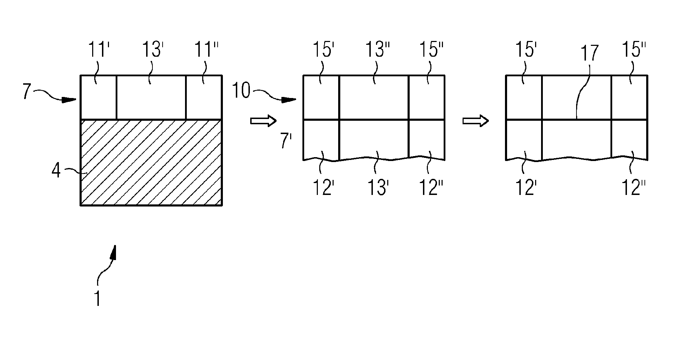

The figure shows schematically the process.

Each layer is analyzed and contour paths are created as well as paths or hatches that creates the core of the object. instead of giving the machine directions to expose all surface objects, only the boundary as a non-limiting example is exposed and the powder molten. This is performed with the standard power level of the laser beam. The core volume section as non-limiting example of the part is not exposed and time is saved. One layer of nonmolten powder remains at the top of the part and is fenced in by the exposed boundary. The normal procedure of the AM machine is repeated and the table is lowered, a fresh new layer of powder is distributed on the part. The process repeats with only boundary exposure and melting. At a certain number of unexposed layers on top of each other, the software first makes the contour pass with a low beam energy input but after the initial pass gives signal to the machine to increase the power to expose the prior to this not exposed powder bed (core). Two to five layers are molten at the same time with higher energy input. The result of this is that the exposure time equivalent to four layers on the core material is saved.

The figure shows a component 1, which is to be build up by additive manufacturing process (AM).

On a substrate 4 or on a part of the component 1, which is already partially produced by AM, a first powder layer 7 is applied as known by the state of the art.

This powder layer 7 is virtually divided in different areas to be densified wherein areas 11', 11" are needed to have a fine microstructure and smooth surface and wherein the coarse area 13' is not so prone to the feature as the areas 11', 11" with the fine microstructure.

Fine microstructure means small grains, wherein coarse microstructure means coarse grains, which are at least 10% larger.

In the densification, sintering or melting process after applying the powder layer 7 only the fine microstructure areas 11', 11" are densified into densified areas 12', 12''.

The coarse microstructure powder area 13' is not yet densified.

In the following step a following powder layer 10 is applied over the modified layer 7' with its densified area 12', 12" and non densified part 13'.

Also this powder layer 10 is virtually divided in areas 15', 15" which need a fine microstructure according to geometry and an coarse part 13" which is not so prone to the features of the fine areas 15', 15".

Areas 11', 11" ; 15', 15" are at least partially overlapping.

In a following densification step the outer areas 15', 15" are densified and also joint to the densified parts 12', 12" of the underlying layer 7'.

In a following step or after having reach the maximum thickness of undensified several layers 13', 13", ... the coarse area 13', 13" is densified in one step leading to a densified inner part 17. This coarse part 17 together with the outer part 11', 11" ; 15', 15" is now fully solidified. Here different laser parameters are used compared to the fine microstructure areas.

It is clear that this schematic drawing only shows the scope of the invention, that means a component 1 can of course reveal parts, wherein between the inner core and the outer area no material build up takes place.

## Claims

1. Method for additive manufacturing a component (1),
wherein in a first step
a first powder layer (7) is applied on a substrate (4) or on at least partially densified part of a component (1), wherein the to be densified parts of the first powder layer (7) are divided in several areas (11', 11" ; 13'),
which receive a fine microstructure (11', 11") or a coarse microstructure (13'),
wherein the areas (11', 11") with the fine microstructure in the first powder layer (7) are densified and the area (13') of the first powder layer (7) with the coarse microstructure keeps preliminary undensified, wherein in a following step
a following powder layer (10) is applied about the modified layer (7') with densified (12', 12") areas and undensified (13') areas of the first powder layer (7) and
wherein the following powder layer (10) is also divided in several areas (15', 15"; 13"),
which receive a fine microstructure (15', 15") and a coarse microstructure (13"),
wherein the areas (15', 15") in the following layer (10) with the fine microstructure are densified
and the area (13") in the following layer with the coarse microstructure keeps preliminary undensified,,
wherein in a last step the remaining areas (13', 13") to be densified are densified to a dense area (17),
repeating these steps or finishing the component (1).

2. Method according to claim 1,
wherein the areas (11', 11" ; 15', 15") with the fine microstructure are at least partially or totally overlapping.
